# EUROPÄISCHE PATENTSCHRIFT

(11) **EP 1 842 646 B1**
(45) Veröffentlichungstag und Bekanntmachung des Hinweises auf die Patenterteilung: **06.10.2010**
(21) Anmeldenummer: 07003631.4
(22) Anmeldetag: 22.02.2007
(51) Int. Cl.: B29B 9/16, B29B 13/06, F26B 23/00

(54) **Trocknungseinrichtung**
Drying installation
Dispositif de séchage

(30) Priorität: 06.04.2006 AT 2732006
(43) Veröffentlichungstag der Anmeldung: 10.10.2007
(73) Patentinhaber: Econ GmbH, 4061 Pasching (AT)
(72) Erfinder: Remili, Johannes, 4073 Wilhering (AT); Hehenberger, Gerhard, 4622 Eggenberg (AT)
(74) Vertreter: Hübscher, Helmut

(56) Entgegenhaltungen:
- DE-A1- 2 919 008
- DE-C1- 3 941 392
- US-A- 3 469 323

## Beschreibung

Die vorliegende Erfindung betrifft eine Trocknungseinrichtung für Kunststoffgranulate, welche nach dem Verfahren der Unterwassergranulation oder Wasserringgranulierung aus allen hierfür bekannten Kunststoffsorten, aber insbesondere auch aus Verbundmaterial, hergestellt werden.

Verbundgranulate im Sinne der vorliegenden Erfindung sind alle herkömmlichen Kunststoffe, welche in einer Mischung mit anderen organischen oder anorganischen Stoffen, beispielsweise Holzfaser, Glasfaser oder anderen Zuschlagstoffen oder auch Mischungen von Zuschlagstoffen vorliegen.

Bei der Unterwassergranulation oder Wasserringgranulierung wird eine Kunststoffschmelze durch die Düsen einer Lochplatte gepresst und am Düsenaustritt von rotierenden Schneidmessern abgetrennt. Die abgetrennten Kunststoffgranulate nehmen unter dem Einfluss des Wassers automatisch annähernd eine Kugelform an. Über einen Prozesswasserstrom werden die Kunststoffgranulate einer Wasserabscheide- und Trocknungseinrichtung zugeführt.

Herkömmliche Trocknungseinrichtungen können als Hauptkomponente einen Zentrifugaltrockner aufweisen, in welchem die Kunststoffgranulate durch Schleuderwirkung von anhaftendem Prozesswasser aus der Granulation getrennt werden. Dabei kann die Schleuderwirkung so eingestellt werden, dass die aus dem Zentrifugaltrockner austretenden Kunststoffgranulate eine Oberflächenrestfeuchte von bis zu 0,1 % aufweisen.

Durch die Fliehkräfte im Zentrifugaltrockner sind die Kunststoffgranulate jedoch einer hohen mechanischen Belastung ausgesetzt, welche zu einer Oberflächenaufrauhung der Kunststoffkügelchen führen. Insbesondere bei Verbundgranulaten kann diese mechanische Beanspruchung auch zur Beschädigung der Kunststoffgranulate führen, da diese im allgemeinen eine höhere Sprödigkeit aufweisen, wodurch ein hoher Feinstaubanteil entsteht

Ein weiteres Problem stellt die abrasive Belastung insbesondere der Prallbleche im Zentrifugaltrockner dar, welche daher einer regelmäßigen Reparatur zugeführt oder erneuert werden müssen. Dieser abrasive Verschleiß ist insbesondere bei Verbundgranulaten, und hier wiederum insbesondere bei solchen mit Glasfasereinschlüssen sehr hoch.

Ein weiterer Nachteil liegt im hohen Reinigungsaufwand beim Wechsel des eingetragenen Granulates, beispielsweise bei einem Farbwechsel. Hier muss der Zentrifugaltrockner vollständig von anhaftenden Granulatrückständen befreit werden, bevor die nächste Charge bearbeitet werden kann.

Aus der DE 103 49 016, welche ein Verfahren zur Herstellung von Kunststoffgranulat aus PET beschreibt, ist es bekannt, das Kunststoffgranulat nach der Unterwassergranulierung und nach der Wasserabtrennung während einer nachfolgenden Wärmebehandlung zu rütteln oder einer Vibration zu unterwerfen. Dabei können die Pellets von einem Fluid durchströmt werden, wobei es auch denkbar ist, dass das Fluid die Pellets dabei verwirbelt. In einer Weiterbildung dieser Idee beschreibt die DE 10 2004 021 595, dass das Fluid wärmer als die Raumtemperatur ist. Weiters erwähnt diese Druckschrift dass der Granulations- und Trocknungseinrichtung eine Fördereinrichtung nachgeschaltet ist, welche als Schwingförderer oder als Förderrinne ausgebildet ist.

Weitere bekannte Trocknungsmethoden arbeiten mit einem Wirbelbett oder Fließbett, wobei das Kunststoffgranulat durch ein Fluid, beispielsweise Inertgas oder Luft von anhaftendem Prozesswasser getrennt wird.

Aus der US 3,469,323 A sind ein Verfahren gemäß dem Oberbegriff des Anspruchs 1 und eine Vorrichtung gemäß dem Oberbegriff des Anspruchs 8 zum Sichten und Trocknen von Kunststoffgranulaten bekannt. Das nach dem Prinzip der Unterwassergranulation hergestellte Granulat wird aus der Granuliervorrichtung mittels eines Prozesswasserstroms ausgetragen und einem Schwerkraft-Wasserabscheider und anschließend einer Trocknungsvorrichtung zugeführt. Die Trocknung in der Trocknungsvorrichtung erfolgt, indem erwärmte Luft durch das Granulat gesaugt wird. Die Vorrichtung zur Trocknung des Granulats besteht aus einem Gehäuse mit aufgesetzter Abzugshaube, einem innerhalb des Gehäuses angeordneten Gebläse zum Abzug der angefeuchteten Trocknungsluft, einem mit einem Luftfilter ausgestatteten Lufteinlass, einer Fördereinrichtung für das zu trocknende Granulat und einer zwischen dem Luftfilter und der Fördereinrichtung angeordneten Lufterhitzer.

In der DE 39 41 392 C1 ist eine Vorrichtung zur Nachbehandlung von Kunststoffgranulat beschrieben, wobei das Granulat-Wassergemisch einer der Granuliereinrichtung unmittelbar nachgeordneten ersten Entwässerungsvorrichtung zugeführt wird, die einerseits mit einem Trockner und andererseits über eine Kühlstrecke mit einer zweiten, in einer höheren Ebene angeordneten Entwässerungsvorrichtung verbunden ist. Die zweite Entwässerungsvorrichtung ist wiederum über eine Leitung mit einem Wassertank verbunden, der über eine weitere Leitung, einer Fördereinrichtung und einen Wärmetauscher mit der Granuliereinrichtung in Verbindung steht.

Der vorliegenden Erfindung, liegt die Aufgabe zugrunde ein Verfahren und eine Vorrichtung zu schaffen, welche insbesondere zur Durchführung dieses Verfahrens dient, welche die Trocknung von Kunststoffgranulaten aus beliebigen Ausgangsstoffen, insbesondere aus Verbundstoffen ermöglicht, wobei eine vollkommen verschleißfreie Trocknung erzielt werden soll. Eine weitere Aufgabe besteht in der Optimierung des Energiebedarfs zur Trocknung. Eine dritte Aufgabe besteht darin, die anhaftende Restfeuchte noch weiter zu reduzieren, um Problemen bei der Langzeitlagerung und Weiterverarbeitung der Granulate und hier insbesondere der Verbundgranulate vorzubeugen.

Diese Aufgaben werden durch ein Verfahren, welches die technischen Merkmale von Anspruch 1 aufweist, sowie von einer Vorrichtung, welche die technischen Merkmale von Anspruch 8 aufweist, gelöst. Vorteilhafte Weiterbildungen sind Gegenstand der abhängigen Ansprüche.

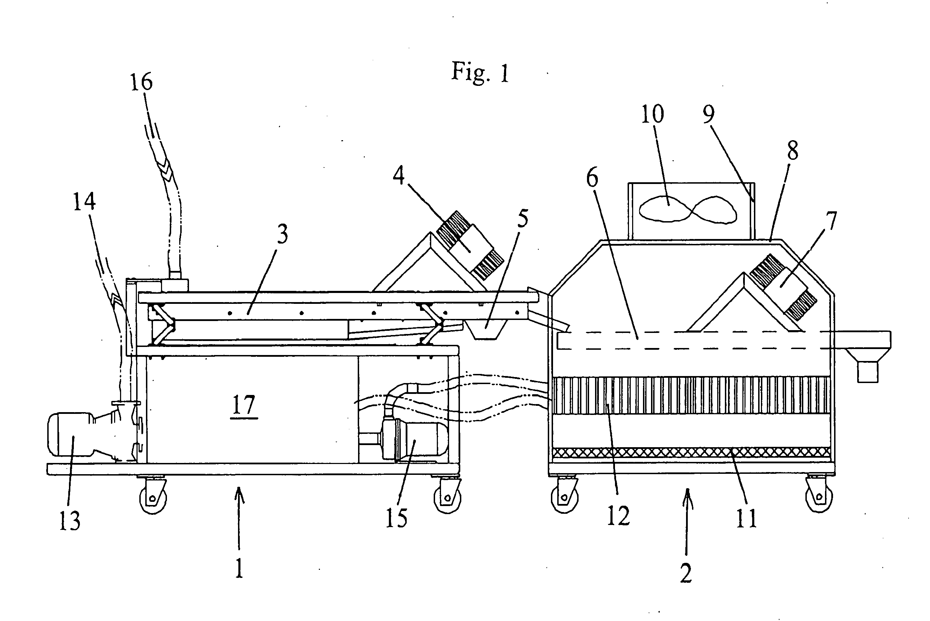

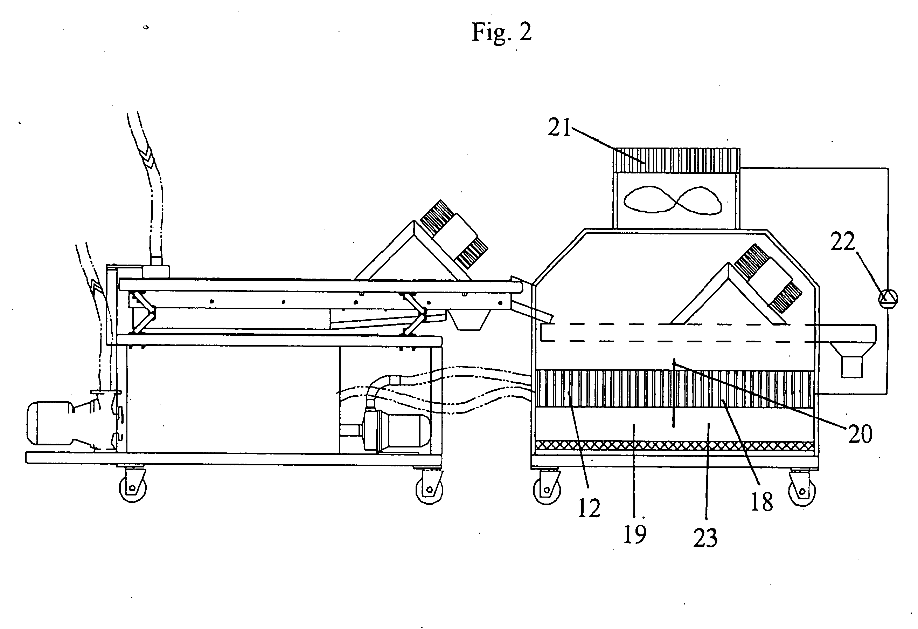

Eine mögliche Ausführungsform der Erfindung wird anhand der Figuren näher erläutert. Darin zeigt Fig. 1 eine Vorrichtung zur Durchführung des erfndungsgemäßen Verfahrens. Fig. 2 stellt eine vorteilhafte Weiterentwicklung der Vorrichtung gemäß Fig. 1 dar.

Das aus der hier nicht dargestellten Granuliereinheit kommende Granulat wird mit dem Prozesswasserzulauf 16 zu einer perforierten Vibrationsrinne 3 geführt. Das ablaufende Prozesswasser wird im darunter angeordneten Wassertank 17 aufgefangen. Die Vibrationsrinne 3 steht mit mindestens einem herkömmlichen Rüttelmotor 4 in Wirkverbindung. Nach dem Passieren eines Überkornabscheiders 5 gelangt das mit Restfeuchtigkeit behaftete Granulat zu einer zweiten Vibrationsrinne 6, welche wiederum mit mindestens einem Rüttelmotor 7 in Wirkverbindung steht. Die Vibrationsrinne 6 ist in einem Gehäuse 8 fixiert, welches eine Ablufthaube 9 besitzt, innerhalb welcher ein Gebläse 10 angeordnet ist. Im Bodenbereich des Gehäuses 8 befindet sich der Lufteinlass mit dem Luftfilter 11. Zwischen dem Luftfilter 11 und der Vibrationsrinne 6 ist mindestens ein Wärmetauscher 12 angeordnet. Das im Wassertank 3 aufgefangene Prozesswasser 1 wird über eine Pumpe 13 wieder der Granuliereinheit über die Ablaufleitung 14 zugeführt

Das Prozesswasser wird durch den Granulateintrag erwärmt, wobei die eingebrachte Wärmemenge in erster Linie abhängig ist von der stofflichen Zusammensetzung des Granulats. Die Prozesswassertemperatur darf jedoch nicht über einen vorgegebenen Temperaturwert ansteigen. Bei herkömmlichen Granuliereinheiten wird die Prozesswassertemperatur beispielsweise durch den Einbau eines Wasser-Wasser - Wärmetauschers unterhalb dieses Temperaturwertes gehalten. Der Wärmeinhalt des ausgeschleusten Prozesswassers geht verloren.

Beim erfindungsgemäßen Verfahren wird der Wärmeinhalt des Prozesswassers jedoch zur Erwärmung der Trocknungsluft im Wärmetauscher 12 verwendet. Das aus dem Wärmetauscher 12 über die Kühlwasserpumpe 15 rückgewonnene, kältere Wasser gelangt entweder zurück in den Wassertank 17 und von dort über die Pumpe 13 zurück zur Granuliereinheit oder es wird direkt zur Granuliereinheit zurück geführt.

Durch die damit erzielte Aufheizung der Trocknungsluft, welche mittels Gebläse 10 durch das auf der Vibrationsrinne 6 liegende Granulat gesaugt wird, kann die dem Granulatprodukt anhaftende Oberflächen-Restfeuchte auf bis zu 0,01 % oder noch weiter reduziert werden, wodurch sich die Langzeitlagerstabilität des Granulatproduktes wesentlich erhöht und insbesondere seine Weiterverarbeitungseigenschaften wesentlich verbessert werden.

In Figur 2 ist der Rauminhalt unterhalb der Vibrationsrinne 6 durch ein Trennblech 20 vollständig oder teilweise voneinander abgetrennt. Zwischen der Vibrationsrinne 6 und dem Luftfilter 11 sind zwei Wärmetauscher 12 und 18 angeordnet. Die vom Gebläse 10 angesaugte Trocknungsluft wird teilweise vom ersten Wärmetauscher 12 in beschriebener Weise aufgewärmt und durch das Granulat auf dem perforierten Vibrationsblech 6 geleitet. Der Wärmeinhalt dieses ersten Wärmetauschers 12 wird in beschriebener Weise aus dem Prozesswasser aus Wassertank 17 gewonnen. Der Wärmeinhalt des zweiten Wärmetauschers 18 wird der feuchten Abluft nach dem Gebläse 10 durch einen weiteren Wärmetauscher 21 entnommen und über eine Pumpe 22 dem Wärmetauscher 18 zugeführt.

Dadurch wird einerseits ermöglicht, dass die in der Abluft enthaltene Feuchtigkeit an der Oberfläche von Wärmetauscher 21 kondensiert wird und dadurch leicht aufzufangen ist, wodurch die Feuchtigkeit der aus der Anlage in die Raumluft austretenden Abluft erheblich reduziert wird, andererseits lässt sich auf diese Weise die am Granulat anhaftende Oberflächenfeuchtigkeit in vorteilhafter Weise weiter reduzieren.

Ein weiterer Vorteil der Erfindung liegt in der schonenderen Art der Trocknung, bei der das Granulat durch die Vibrationsrinnen erheblich weniger mechanisch beansprucht wird als in einem Zentrifugaltrockner. Für Verbundgranulate ergeben sich dadurch erheblich größere Freiheitsgrade für Art der Zusammensetzung und die Mischungsverhältnisse der einzelnen Komponenten.

Weitere Vorteile sind darin zu finden, dass die Trocknung praktisch ohne Verschleiß der Apparatur oder Teilen davon ermöglicht wird und wesentlich weniger Wartungsaufwand erforderlich wird, womit die Servicezeiten der Vorrichtung in vorteilhafter Weise reduziert werden. Weiters ist damit eine erhebliche Reduktion des Feinstaubanteiles im Produktgranulat erzielbar.

## Patentansprüche

1. Verfahren zur Trocknung von Kunststoffgranulaten aus beliebigen Ausgangsstoffen, insbesondere aus Verbundstoffen, welche nach dem Prinzip der Unterwassergranulation oder der Wasserringgranulierung oder einer vergleichbaren Technik hergestellt wurden, wobei das Granulat aus der Granuliervorrichtung mittels eines Prozesswasserstromes einem Schwerkraft-Wasserabscheider (1) zugeführt und nach dem Schwerkraft-Wasserabscheider einer Trocknungsvorrichtung (2) zugeführt wird, wobei in der Trocknungsvorrichtung (2) erwärmte Raumluft durch das Granulat gesaugt wird, **dadurch gekennzeichnet, dass** der zugeführte Wärmeinhalt der erwärmten Raumluft dem Prozesswasser mittels Wärmetauscher (12) entzogen wird.

2. Verfahren nach Anspruch 1, **dadurch gekennzeichnet, dass** das Granulat durch den Schwerkraft-Wasserabscheider (1) und die Trocknungsvorrichtung (2) insbesondere mittels perforierter Vibrationsrinnen (3, 6) in einer mechanisch sehr schonenden Weise transportiert wird.

3. Verfahren nach Anspruch 1 oder 2, **dadurch gekennzeichnet, dass** die zugeführte Frischluft nach dem Passieren eines Luftfilters (11) mindestens durch einen Luft-Wasser-Wärmetauscher (12) geführt wird.

4. Verfahren nach Anspruch 1, 2 oder 3, **dadurch gekennzeichnet, dass** das im Wärmetauscher (12) gekühlte Prozesswasser in den Wassertank (17) und/oder in die Granuliereinheit rückgeführt wird.

5. Verfahren nach Anspruch 1, 2, 3 oder 4, **dadurch gekennzeichnet, dass** die Temperatur der Granuliereinheit über die Fließgeschwindigkeit, mit welcher das Prozesswasser durch den Wärmetauscher (12) gepumpt wird, geregelt wird.

6. Verfahren nach einem der Ansprüche 1 bis 5, **dadurch gekennzeichnet, dass** die zur Trocknung des Granulates angesaugte Frischluft zweigeteilt wird und von zwei räumlich voneinander getrennten Wärmetauschern (12, 18) erwärmt wird und das Granulat nacheinander von diesen beiden erwärmten Frischluftströmen beaufschlagt wird, und dass der Wärmeinhalt der angefeuchteten Abluft von einem weiteren Wärmetauscher (21) aufgenommen und dem zweiten Wärmetauscher (18) zugeführt wird, womit gleichzeitig die in der Abluft enthaltene Feuchtigkeit kondensiert und so aus dem Abluftstrom ausgetragen wird.

7. Verfahren nach einem der Ansprüche 1 bis 6, **dadurch gekennzeichnet, dass** die Trocknung in zwei hintereinander angeordneten Trocknungsvorrichtungen (2) vorgenommen wird, wobei in der ersten Trocknungsvorrichtung (2) der in der Abluft vorhandene Wärmeinhalt durch den innerhalb der Abzugshaube (9) vorhandenen Wärmetauscher (21) gewonnen und in der zweiten Trocknungsvorrichtung dem Wärmetauscher (18) zugeführt wird.

8. Vorrichtung zur Trocknung von Kunststoffgranulaten aus beliebigen Ausgangsstoffen, insbesondere aus Verbundstoffen, welche nach dem Prinzip der Unterwassergranulation oder der Wasserringgranulierung oder einer vergleichbaren Technik hergestellt wurden, bestehend aus einem Schwerkraft-Wasserabscheider (1) und mindestens einer nachgeschalteten Trocknungsvorrichtung (2), welche insbesondere nach einem Verfahren nach einem der Ansprüche 1 bis 7 arbeitet, wobei die Trocknungsvorrichtung (2) aus einem Gehäuse (8) mit aufgesetzter Abzugshaube (9), einem innerhalb der Abzugshaube (9) angeordneten Gebläse (10) zum Abzug der angefeuchteten Trocknungsluft, einem als Luftfilter (11) ausgebildeten Lufteinlass, einer zum Durchführen des Granulates durch die Trocknungsvorrichtung (2) dienenden, zum Luftdurchlass ausgebildeten Transporteinrichtung (6) und einer zwischen dem Luftfilter (11) und der Transporteinrichtung (6) angeordneten Lufterwärmungsvorrichtung, **dadurch gekennzeichnet, dass** die Lufterwärmungsvorrichtung ein Luft-Wasser-Wärmetauscher (12) ist.

9. Vorrichtung nach Anspruch 8, **dadurch gekennzeichnet, dass** unterhalb des Schwerkraft-Wasserabscheiders (1) ein Wassertank (17) angeordnet ist und der Wärmetauscher (12) mit Prozesswasser aus dem Wassertank (17) über eine Pumpe (15) versorgt wird.

10. Vorrichtung nach Anspruch 8 oder 9, **dadurch gekennzeichnet, dass** das vom Wärmetauscher (12) rückfließende Prozesswasser in den Wassertank (17) geleitet wird.

11. Vorrichtung nach einem der Ansprüche 8 bis 10, **dadurch gekennzeichnet, dass** das vom Wärmetauscher (12) rückfließende Prozesswasser direkt in die Granuliereinheit geleitet wird.

12. Vorrichtung nach einem der Ansprüche 8 bis 11, **dadurch gekennzeichnet, dass** das Prozesswasser aus dem Wassertank (17) über eine Pumpe (13) in den Unterwassergranulator geleitet wird.

13. Vorrichtung nach einem der Ansprüche 8 bis 12, **dadurch gekennzeichnet, dass** das Granulat aus dem Unterwassergranulator mittels zweier perforierter Vibrationsrinnen durch den Schwerkraft-Wasserabscheider (1) und die nachgeschaltete Trocknungsvorrichtung (2) transportiert wird.

14. Vorrichtung nach einem der Ansprüche 8 bis 13, **dadurch gekennzeichnet, dass** der Rauminhalt unterhalb der Vibrationsrinne (6) durch ein Trennblech (20) in zwei voneinander getrennte Räume (19, 23) unterteilt ist in welchen sich je ein Wärmetauscher (12, 18) befindet und dass nach dem Gebläse (10) ein weiterer Wärmetauscher (21) angeordnet ist, welcher den Wärmeinhalt der Abluft aufnimmt und über eine Pumpe (22) dem Wärmetauscher (18) zuführt.

15. Vorrichtung nach einem der Ansprüche 8 bis 14, **dadurch gekennzeichnet, dass** nach dem Schwerkraft-Wasserabscheider (1) zwei in Serie angeordnete Trocknungsvorrichtungen (2) vorgesehen sind, wobei in der ersten Trocknungsvorrichtung (2) der Wärmetauscher (12) und in der zweiten Trocknungsvorrichtung der Wärmetauscher (18), sowie innerhalb der Abzugshaube (9) der ersten Trocknungsvorrichtung (2) der Wärmetauscher (21) angeordnet sind und der Wärmeinhalt der Abluft aus der ersten Trocknungseinheit (2) über die Pumpe (22) dem Wärmetauscher (18) zugeführt wird.

## Claims

1. Process for drying synthetic granular materials made from any starting materials, in particular composite materials, which have been produced according to the principle of under-water granulation or water ring granulation or a comparable technique, wherein the granular material is supplied from the granulation device by means of a process water stream to a gravity water separator (1) and is supplied, downstream of the gravity water separator, to a drying device (2), wherein in the drying device (2) heated ambient air is drawn through the granular material, **characterised in that** the supplied heat content of the heated ambient air is extracted from the process water by means of a heat exchanger (12).

2. Process as claimed in claim 1, **characterised in that** the granular material is transported through the gravity water separator (1) and the drying device (2) in particular by means of perforated vibration channels (3, 6) in a mechanically very gentle manner.

3. Process as claimed in claim 1 or 2, **characterised in that** the supplied fresh air is fed, after passing through an air filter (11), at least through an air-water heat exchanger (12).

4. Process as claimed in claim 1, 2 or 3, **characterised in that** the process water cooled in the heat exchanger (12) is returned to the water tank (17) and/or to the granulation unit.

5. Process as claimed in claim 1, 2, 3 or 4, **characterised in that** the temperature of the granulation unit is regulated by the flow rate at which the process water is pumped through the heat exchanger (12).

6. Process as claimed in any one of claims 1 to 5, **characterised in that** the fresh air drawn in to dry the granular material is divided into two streams and heated by two spatially mutually separated heat exchangers (12, 18), and the granular material is exposed to both these heated fresh air streams one after the other, and that the heat content of the humidified exhaust air is absorbed by a further heat exchanger (21) and supplied to the second heat exchanger (18), whereby at the same time the moisture contained in the exhaust air is condensed and thus discharged from the exhaust air stream.

7. Process as claimed in any one of claims 1 to 6, **characterised in that** drying is carried out in two drying devices (2) disposed one behind the other, wherein in the first drying device (2) the heat content in the exhaust air is recovered by the heat exchanger (21) provided within the exhaust hood (9) and is supplied to the heat exchanger (18) in the second drying device.

8. Device for drying synthetic granular materials made from any starting materials, in particular composite materials, which have been produced according to the principle of under-water granulation or water ring granulation or a comparable technique, consisting of a gravity water separator (1) and at least one drying device (1) connected downstream, which operates in particular according to a process as claimed in any one of claims 1 to 7, wherein the drying device (2) [consists] of a housing (8) with an extraction hood (9) placed thereon, a fan (10) disposed within the extraction hood (9) for extracting the humidified drying air, an air inlet formed as an air filter (11), a transport device (6) serving to carry the granular material through the drying device (2) and being formed for the passage of air, and an air heating device disposed between the air filter (11) and the transport device (6), **characterised in that** the air heating device is an air-water heat exchanger (12).

9. Device as claimed in claim 8, **characterised in that** a water tank (17) is disposed below the gravity water separator (1), and the heat exchanger (12) is supplied with process water from the water tank (17) via a pump (15).

10. Device as claimed in claim 8 or 9, **characterised in that** the process water flowing back from the heat exchanger (12) is fed into the water tank (17).

11. Device as claimed in any one of claims 8 to 10, **characterised in that** the process water flowing back from the heat exchanger (12) is fed directly into the granulation unit.

12. Device as claimed in any one of claims 8 to 11, **characterised in that** the process water is fed from the water tank (17) into the under-water granulator via a pump (13).

13. Device as claimed in any one of claims 8 to 12, **characterised in that** the granular material is transported from the under-water granulator by means of two perforated vibration channels through the gravity water separator (1) and the drying device (2) which is connected downstream.

14. Device as claimed in any one of claims 8 to 13, **characterised in that** the space below the vibration channel (6) is divided by a separating plate (20) into two mutually separated spaces (19, 23), a respective heat exchanger (12, 18) being located therein, and that downstream of the fan (10) a further heat exchanger (21) is disposed which absorbs the heat content of the exhaust air and supplies it to the heat exchanger (18) via a pump (22).

15. Device as claimed in any one of claims 8 to 14, **characterised in that** downstream of the gravity water separator (1) two drying devices (2) disposed in series are provided, wherein the heat exchanger (12) is disposed in the first drying device (2) and the heat exchanger (18) is disposed in the second drying device, and the heat exchanger (21) is disposed within the extraction hood (9) of the first drying device (2), and the heat content of the exhaust air is supplied from the first drying unit (2) to the heat exchanger (18) via the pump (22).

## Revendications

1. Procédé de séchage de granulats en matière synthétique composés de substances de départ quelconques, en particulier de substances composites, ayant été fabriquées selon le principe de la granulation sous l'eau ou de la granulation en anneau d'eau, ou selon une technique comparable, le granulat étant amené du dispositif de granulation, au moyen d'un flux d'eau du processus, à un séparateur d'eau travaillant par gravité (1) et, après le séparateur d'eau travaillant par gravité, amené à un dispositif de séchage (2), de l'air ambiant, chauffé dans le dispositif de séchage (2), étant aspiré par le granulat, **caractérisé en ce que** le contenu en chaleur, amené, de l'air ambiant chauffé est prélevé de l'eau du processus au moyen d'un échangeur de chaleur (12).

2. Procédé selon la revendication 1, **caractérisé en ce que** le granulat est transporté, d'une manière très précautionneuse mécaniquement, à travers le séparateur d'eau travaillant par gravité (1) et le dispositif de séchage (2), en particulier au moyen de goulottes vibrantes (3, 6) perforées.

3. Procédé selon la revendication 1 ou 2, **caractérisé en ce que** l'air neuf amené, après passage dans un filtre à air (11), est guidé au moins à travers un échangeur de chaleur air-eau (12).

4. Procédé selon la revendication 1, 2 ou 3, **caractérisé en ce que** l'eau du processus refroidie dans l'échangeur de chaleur (12) est retournée dans le réservoir à eau (17) et/ou dans l'unité de granulation.

5. Procédé selon la revendication 1, 2, 3 ou 4, **caractérisé en ce que** la température de l'unité de granulation est régulée par l'intermédiaire de la vitesse d'écoulement à laquelle l'eau du processus est pompée dans l'échangeur de chaleur (12).

6. Procédé selon l'une des revendications 1 à 5, **caractérisé en ce que** l'air neuf, aspiré pour le séchage du granulat, est divisé en deux et chauffé par deux échangeurs de chaleur (12, 16) séparés spatialement l'un de l'autre, et le granulat est sollicité, l'un après l'autre, par ces deux flux d'air neuf chauffés, et **en ce que** le contenu en chaleur de l'air d'évacuation humidifié est capté par un autre échangeur de chaleur (21) et amené au deuxième échangeur de chaleur (21), faisant que, simultanément, l'humidité contenue dans l'air d'évacuation est condensée et ainsi expulsée du flux d'air d'évacuation.

7. Procédé selon l'une des revendications 1 à 6, **caractérisé en ce que** le séchage est accompli dans deux dispositif de séchage (2) disposés l'un derrière l'autre, sachant que, dans le premier dispositif de séchage (2), le contenu en chaleur, présent dans l'air d'évacuation, est obtenu au moyen de l'échangeur de chaleur (21) présent à l'intérieur de la hotte d'extraction (9) et amené à l'échangeur de chaleur (18), dans le deuxième dispositif de chauffage.

8. Dispositif de séchage de granulats en matière synthétique composés de substances de départ quelconques, en particulier de substances composites, ayant été fabriquées selon le principe de la granulation sous l'eau ou de la granulation en anneau d'eau, ou selon une technique comparable, composé d'un séparateur d'eau travaillant par gravité (1) et d'au moins un dispositif de séchage (2), installé en aval, travaillant en particulier suivant un procédé selon l'une des revendications 1 à 7, le dispositif de séchage (2) étant composé d'une hotte d'extraction (9) appliquée sur un carter (8), d'une soufflante (10) disposée à l'intérieur de la hotte d'extraction (9), pour l'extraction de l'air de séchage
humidifié, d'une admission d'air réalisée sous forme de filtre à air (11), d'un dispositif de transport (6), réalisé pour permettre le passage d'air, servant à faire passer le granulat à travers le dispositif de séchage (2), et d'un dispositif de chauffage d'air, disposé entre le filtre à air (11) et le dispositif de transport (6), **caractérisé par le fait que** le dispositif de chauffage d'air est un échangeur de chaleur air-eau (12).

9. Dispositif selon la revendication 8, **caractérisé en ce qu'**un réservoir à eau (17) est disposé au-dessous du séparateur d'eau travaillant par gravité (1), et l'échangeur de chaleur (12) est alimenté en eau du processus provenant du réservoir à eau (17) par l'intermédiaire d'une pompe (15).

10. Dispositif selon la revendication 8 ou 9, **caractérisé en ce que** l'eau du processus refluant de l'échangeur de chaleur (12) est dirigée dans le réservoir à eau (17).

11. Dispositif selon l'une des revendications 8 à 10, **caractérisé en ce que** l'eau du processus refluant de l'échangeur de chaleur (12) est dirigée directement dans l'unité de granulation.

12. Dispositif selon l'une des revendications 8 à 11, **caractérisé en ce que** l'eau du processus provenant du réservoir à eau (17) est dirigée dans le granulateur travaillant sous l'eau par l'intermédiaire d'une pompe (13).

13. Dispositif selon l'une des revendications 8 à 12, **caractérisé en ce que** le granulat provenant du granulateur travaillant sous l'eau est transporté, au moyen de deux goulottes vibrantes perforées, à travers le séparateur d'eau travaillant par gravité (1) et le dispositif de séchage (2) installé en aval.

14. Dispositif selon l'une des revendications 8 à 13, **caractérisé en ce que** le volume d'enceinte situé au-dessous de la goulotte vibrante (6) est subdivisé, au moyen d'une tôle de séparation (20), en deux enceintes (19, 23) séparées l'une de l'autre, dans chacune desquelles se trouve un échangeur de chaleur (12, 18), et **en ce qu'**en aval de la soufflante (10) est disposé un échangeur de chaleur (21) supplémentaire, recevant le contenu en chaleur de l'air d'évacuation et l'amenant à l'échangeur de chaleur (18) par l'intermédiaire d'une pompe (22).

15. Dispositif selon l'une des revendications 8 à 14, **caractérisé en ce que** deux dispositifs de séchage (2) disposés en série sont prévus en aval du séparateur d'eau travaillant par gravité (1), l'échangeur de chaleur (12) étant disposé dans le premier dispositif de séchage (2) et l'échangeur de chaleur (18) dans le deuxième dispositif de séchage, et l'échangeur de chaleur (21) étant disposé à l'intérieur de la hotte d'extraction (9) du premier dispositif de séchage (2), et le contenu en chaleur de l'air d'évacuation provenant du premier dispositif de séchage (2) est amené à l'échangeur de chaleur (18) par l'intermédiaire de la pompe (22).
